# FASCICULE DE BREVET EUROPEEN

(11) **EP 2 162 318 B1**
(45) Date de publication et mention de la délivrance du brevet: **01.06.2011**
(21) Numéro de dépôt: 08805928.2
(22) Date de dépôt: 04.06.2008
(51) Int. Cl.: B60R 21/06, B60R 21/02

(54) **DISPOSITIF DE RETENUE DE CHARGE POUR HABITACLE D'AUTOMOBILE**
LASTHALTEVORRICHTUNG FÜR DEN PASSAGIERRAUM EINES KRAFTFAHRZEUGS
LOAD RETENTION DEVICE FOR A MOTOR VEHICLE PASSENGER COMPARTMENT

(30) Priorité: 04.06.2007 FR 0703944
(43) Date de publication de la demande: 17.03.2010
(73) Titulaire: Renault S.A.S., 92100 Boulogne-Billancourt (FR)
(72) Inventeur: MARIES, Christophe, F-78100 Saint Germain En Laye (FR); MARTZ, Philippe, F-78650 Beynes (FR)
(86) Numéro de dépôt international: PCT/FR2008/050987
(87) Numéro de publication internationale: WO 2008/152326

(56) Documents cités:
- DE-A1- 10 300 505
- DE-A1- 19 728 547
- FR-A- 2 892 366
- US-A1- 2006 208 518

## Description

La présente invention se rapporte à un dispositif de retenue de charge pour un véhicule automobile permettant de retenir une charge mobile dans le véhicule en cas de décélération brutale.

Des dispositifs de retenue de charge connus comprennent un filet destiné à être étendu en travers d'un habitacle d'un véhicule automobile, généralement entre des sièges d'une banquette arrière et un coffre. Ainsi, le filet peut-il retenir des bagages du coffre en cas de freinage brutal. Certains véhicules en effet, comportent un habitacle recouvert d'un pavillon dans lequel le coffre arrière est isolé d'une partie avant simplement par une banquette arrière et en particulier par un dossier de la banquette arrière. Aussi, un filet est étendu verticalement en travers de l'habitacle, entre le dossier de la banquette et la paroi de plafond du pavillon. Les dispositifs de retenue de charge connus comportent un boîtier, ou carter, dans lequel est enroulé autour d'un arbre, un filet de retenue. Le carter est fixé dans une paroi arrière de la banquette arrière et le filet est déroulé pour être étendu et accroché à la paroi du pavillon. L'arbre autour duquel le filet est enroulé, est équipé de moyens de rappel élastiques, lesquels permettent d'exercer un couple de rotation inverse sur l'arbre et ainsi, permettent de maintenir ledit filet tendu. En outre, le carter est équipé de moyens de blocage de l'arbre en rotation, pour bloquer le déroulement du filet, lorsque le filet est soumis à l'impact d'une charge provenant du coffre, par exemple au cours d'un freinage brusque.

On pourra notamment se référer au document EP 838 375, dans lequel il est décrit un tel dispositif. Toutefois, il nécessite de prévoir des moyens relativement complexes, adaptés à bloquer l'arbre en rotation, uniquement lorsqu'il est soumis à un couple de rotation, avec une impulsion supérieure à une impulsion limite donnée. En effet, en dessous de cette impulsion limite, le filet doit pouvoir être déroulé normalement pour être accroché dans la paroi du pavillon.

FR 2 8 92 366 décrit un dispositif de retenue selon le préambule de la revendication 1.

Un problème qui se pose alors et que vise à résoudre la présente invention est de fournir un dispositif de retenue de charge qui permette d'éviter le déroulement du filet lorsqu'il est soumis à l'impact d'une charge, mais qui soit moins coûteux et plus fiable que les dispositifs de l'art antérieur.

Dans ce but, la présente invention propose un dispositif de retenue de charge pour véhicule automobile selon la revendication 1.

Ainsi, une caractéristique de l'invention réside dans la mise en oeuvre de dents de retenue le long du bord avant du carter et dans lesquelles le filet est susceptible de venir en prise dès qu'il est entraîné vers l'avant du véhicule sous l'impact d'une charge mobile durant une décélération brutale. De la sorte, il n'est nul besoin de prévoir de moyens complexes et coûteux pour venir bloquer l'arbre sur lequel est enroulé le filet en cas de freinage, mais de prévoir des dents de retenue le long du bord avant. Par ailleurs, ces dents de retenue retiennent le filet de manière fiable, lorsque ses mailles viennent s'y accrocher.

Au surplus, ledit carter comporte en outre une aile d'appui s'étendant à partir dudit bord avant, dans un sens opposé auxdits moyens de liaison pour prendre appui contre ladite paroi arrière, et ainsi limiter les possibilités de basculement du boîtier lorsque le filet est soumis à l'impact d'une charge.

Par ailleurs, le bord avant est avantageusement crénelé pour former ces dents de retenue, de sorte qu'il n'est nul besoin d'ajouter des éléments supplémentaires pour les réaliser. En outre, les dents sont recourbées en crochet vers le filet enroulé, de manière à ce que les mailles du filet ne puissent s'échapper aisément des dents de retenue. En effet, comme on expliquera plus en détail dans la suite de la description, lorsque sous l'impact d'une charge le filet est entraîné vers l'avant du véhicule, les mailles du filet viennent en prise dans les dents de retenue, et tendent à exercer une traction sur ces dents qui elles-mêmes, tendent à entraîner le boîtier en basculement vers l'avant et partant, le basculement des dents de retenue, ce qui peut provoquer la libération des mailles. Ainsi, la charge poursuivrait sa course car le déroulement du filet ne serait plus empêché. Lorsque les dents de retenue sont recourbées, les mailles du filet leur échappent beaucoup moins facilement quelles que soient les circonstances et la position relative du carter.

Avantageusement, lesdits moyens de liaison comprennent une glissière et un coulisseau pour monter ledit carter de manière amovible sur ladite paroi. Ainsi, lorsque le filet de retenue n'est pas nécessaire et que le carter occasionnerait une gêne pour l'encombrement du coffre par exemple, il peut être retiré. En outre, ledit carter et lesdits moyens de blocage peuvent être réalisés de manière relativement économique en étant moulés d'une seule pièce en matière plastique. Par ailleurs, l'aile d'appui peut également être moulée d'une seule pièce avec le carter et les moyens de blocage.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique en coupe droite d'un dispositif de retenue de charge selon l'invention ; et,
- la figure 2 est une vue schématique partielle en perspective du dispositif de retenue de charge illustrée sur la figure 1.

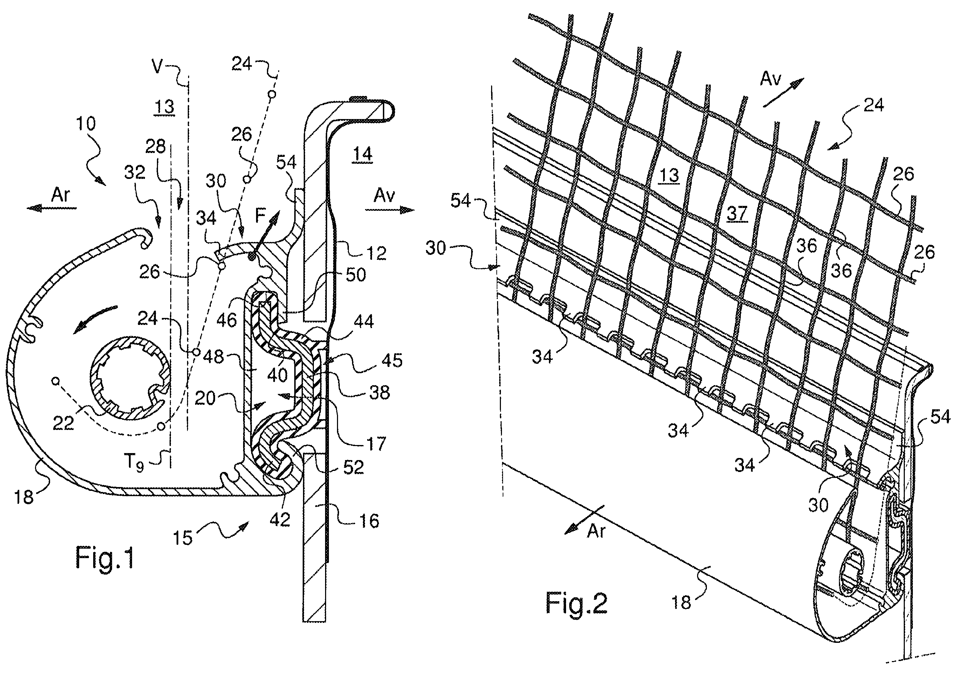

La Figure 1 illustre un dispositif de retenue de charge 10 conforme à l'invention installé contre une paroi arrière 12 d'un siège 14 d'un véhicule automobile. Le véhicule automobile présente un habitacle 13 dans lequel est notamment installé le siège 14. Ainsi, le dispositif de retenue de charge 10 est orienté vers l'arrière Ar du véhicule automobile tandis que le siège 14 est lui orienté vers l'avant Av du véhicule. En outre, le dispositif de retenue de charge 10 est monté dans une partie supérieure 15 de la paroi arrière 12 du siège 14.

Par ailleurs, la paroi arrière 12 est recouverte d'une garniture déformable 16, par exemple une moquette de finition. Le siège 14 est susceptible d'être recouvert entièrement d'une telle garniture déformable 16 pour des raisons de confort.

Le dispositif de retenue de charge 10 comprend un carter 18 qui s'étend longitudinalement et qui est relié, par une partie avant 17, à la paroi arrière 12 du siège 14 par l'intermédiaire d'un ensemble à glissière 20. Le carter 18 présente une forme générale cylindrique. Grâce à cet ensemble à glissière 20, le carter 18 est maintenu transversalement contre la paroi arrière 12 du siège, dans sa partie supérieure 15. Par ailleurs, le carter 18 comporte un arbre d'enroulement 22 dont les deux extrémités sont respectivement maintenues dans deux paliers opposés non représentés , les deux paliers opposés sont eux-mêmes maintenus en position fixe par deux flasques opposés qui ne sont pas représentés non plus, et rapportés aux deux extrémités opposées du carter 18. Les deux flasques opposés permettent de maintenir l'arbre d'enroulement 22 sensiblement au centre du carter 18.

L'arbre d'enroulement 22 permet d'enrouler un filet 24 dont seuls les fils de trame 26 apparaissent sur la figure 1 mais qui apparaît plus complètement sur la figure 2 que l'on décrira dans la suite de la description. Par ailleurs, l'arbre d'enroulement 22 est relié audit flasque par l'intermédiaire de moyens élastiques non représentés.

Le carter 18 présente dans sa partie supérieure, une fente de sortie 28 permettant de dérouler le filet 24. Cette fente de sortie 28 présente un bord avant 30 situé vers l'avant Av près de la paroi arrière 12 et de l'ensemble à glissière 20, et un bord arrière 32 situé vers l'arrière, et opposé au bord avant 30. Par ailleurs, l'arbre d'enroulement 22 et la fente de sortie 28 sont ajustés l'un par rapport à l'autre de façon qu'un plan vertical Tg, tangent à l'arbre d'enroulement 22 s'étende dans la fente de sortie 28 entre le bord avant 30 et le bord arrière 32. Au repos, le filet 24 est entièrement enroulé autour de l'arbre d'enroulement 22 à l'intérieur du carter 18 ; lorsque le filet 24 est étendu en position dans l'habitacle 13, sa partie supérieure est maintenue et est éloignée du carter 18 selon une direction verticale V, au droit de la fente de sortie 28 et par là-même, l'arbre d'enroulement 22 est entraîné en rotation, tel que représenté sur la figure, dans le sens trigonométrique T. L'arbre d'enroulement 22 est rappelé en rotation dans un sens opposé grâce aux moyens élastiques précités, de telle sorte que lorsque ladite partie supérieure du filet 24 est maintenue éloignée du carter 18, par exemple accrochée dans une paroi de plafond de l'habitacle, le filet 24 est alors maintenu en tension. Et il présente alors une zone active qui s'étend entre les deux bords opposés 30, 32 et sensiblement verticalement selon un plan vertical parallèle au plan vertical Tg tangent à l'arbre d'enroulement 22.

Selon l'invention, le bord avant 30 est crénelé, ainsi que l'illustre la figure 2, de façon à former des dents de retenue 34 espacées les unes des autres. Le bord avant 30 présente ainsi des entailles carrées 36 espacées les unes des autres d'une longueur correspondant sensiblement à la demi-largeur de ces entailles carrées 36. En outre, on retrouve sur cette figure 2 le filet 24 étendu, avec ses fils de trame 26, lesquels sont maintenus espacés les uns des autres grâce à des fils de chaîne 36, d'une distance valant sensiblement trois fois la largeur d'une dent de retenue 34. Fils de trame 26 et fils de chaîne 36 forment alors des mailles 37 du filet 24.

On se référera à nouveau à la figure 1, sur laquelle on retrouve une dent de retenue 34 recourbée vers l'intérieur du carter 18 et plus précisément vers l'arbre d'enroulement 22. On expliquera plus en détail dans la suite de la description l'intérêt d'une telle courbure.

Avant cela, on va décrire plus en détail l'ensemble à glissière 20 qui permet de relier le carter 18 à la paroi arrière 12. Ainsi, l'ensemble à glissière 20 comporte tout d'abord un coulisseau 38 constitué d'un profilé en U métallique dont les deux ailes opposées 40, 42 sont recourbées dans des directions opposées l'une de l'autre. Le profilé en U est recouvert d'une enveloppe en matière plastique 44 pour faciliter le coulissement. Le coulisseau 38 est alors montés transversalement en applique sur la paroi arrière 12 et il y est fixé par la partie de fond 45 du profilé en U. L'ensemble à glissière 20 comporte de manière complémentaire une glissière 46, laquelle présente une large rainure 48 et deux rebords opposés 50, 52 recourbés l'un vers l'autre et vers l'intérieur de la glissière 48 de manière à pouvoir emprisonner le coulisseau 38. De la sorte, la glissière 46 qui ne forme qu'une seule pièce avec le carter 18, permet de relier ce dernier à la paroi arrière 12 en engageant précisément la glissière 46 sur le coulisseau 38 et en entraînant transversalement le carter 18 le long du coulisseau 38.

Par ailleurs, le carter 18 présente, dans sa partie avant 17, une aile d'appui 54 qui s'étend sensiblement parallèlement à un plan défini par la glissière 46 et qui prolonge le bord avant 30 de façon sensiblement perpendiculaire en s'écartant précisément de la glissière 46. Ainsi, l'aile d'appui 54 vient prendre appui sur la garniture 16 du siège 14 en regard de la paroi arrière 12. De la sorte, le carter 18 est rendu solidaire de la paroi arrière 12 non seulement par l'intermédiaire du coulisseau 38 au niveau de la partie de fond 45 du profilé en U, mais aussi par l'intermédiaire de l'aile d'appui 54 qui est espacée du coulisseau 38 et qui vient comprimer la garniture 16.

Ainsi, lorsque le filet 24 est étendu verticalement en travers de l'habitacle 13 derrière le siège 14, il permet de retenir une charge, par exemple un bagage qui du fait d'une décélération brusque du véhicule automobile serait propulsée de l'arrière, vers l'avant compte tenu de l'inertie de cette charge. En effet, lors de cette décélération brusque ou accélération négative, la charge en question vient s'enfoncer dans le filet 24, qui est par là même entraîné vers l'avant Av du véhicule, comme illustré sur la figure 1. Partant, au moins l'un des fils de trame 26 du filet 24 situé sensiblement en regard du bord avant 30 vient en prise dans les dents de retenue 34. De la sorte, le filet 24 est non seulement maintenu en prise au niveau du carter 18 par l'intermédiaire des dents de retenue 34, mais aussi au niveau de la paroi de plafond précité de l'habitacle 13, de sorte que, durant la décélération, la charge est retenue par le filet 24.

Ainsi que l'illustre également la figure 2, lorsque le filet 24 est entraîné vers l'avant Av les mailles 37 situées le long du bord avant 30 viennent en prise dans les dents de retenue 34 sur toute la largeur du carter 18. Compte tenu de l'espacement des fils de chaîne 36 et de l'espacement des dents de retenue 34, chacune des dents de retenue 34 vient en prise dans une maille 37.

Par ailleurs, en se reportant à nouveau à la figure 1, on observe que lors de l'impact de la charge dans le filet 24, ce dernier est susceptible d'exercer par l'intermédiaire des dents de retenue 34, un effort de traction selon une force F orientée dans une direction comprise entre la verticale et la direction avant Av, ce qui a pour effet d'exercer un couple de rotation sur le carter 18 qui tend à pivoter autour d'un axe transversal situé au niveau de la partie de fond 45 du profilé en U. Ce couple de rotation est repris par l'aile d'appui 54, qui lors de l'impact vient légèrement comprimer la garniture 16 contre la paroi 12, mais qui permet toutefois, de maintenir le carter 18 en position de façon que les dents de retenue 34 s'étendent entre l'arbre d'enroulement 22, d'où le filet 24 s'étend sensiblement tangentiellement, et la position de la charge retenue dans le filet 24. Ainsi, l'aile d'appui 54 permet d'éviter le basculement du carter 18 vers l'avant Av, ce qui aurait pour effet de faire échapper les fils de trame 26 du filet 24 des dents de retenue 34, et partant, de libérer le filet 24 qui pourrait alors se dérouler de l'arbre d'enroulement 22. La charge continuerait alors sa course et pourrait alors blesser un occupant de l'habitacle.

Ainsi, grâce à l'aile d'appui 54, il n'est pas nécessaire de prévoir une courbure importante des dents de retenue 34 vers l'intérieur du carter 18, car ce dernier reste, durant l'impact, dans une position fixe par rapport au siège14. Une courbure importante aurait l'avantage d'un meilleur accrochage du filet 24 lors d'une décélération brutale, mais en revanche elle présenterait un inconvénient lors de la manipulation normale et de l'accrochage du filet 24.

## Revendications

1. Dispositif de retenue de charge (10) pour véhicule automobile, ledit véhicule comprenant une partie avant, une partie arrière et un habitacle (13) situé entre les parties avant et arrière, ledit habitacle comprenant un siège (14) présentant une paroi arrière (12) orientée vers ladite partie arrière, ledit dispositif comprenant un filet de retenue (24) à mailles (37) et un carter (18) à l'intérieur duquel est enroulé ledit filet de retenue, ledit carter présentant une fente de sortie (28) dudit filet et des moyens de liaison (20) pour relier ledit carter (18) à ladite paroi arrière (12), ladite fente de sortie (28) présentant deux bords opposés, un bord avant (30) rapproché desdits moyens de liaison (20) et un bord arrière (32) espacé desdits moyens de liaison, ledit filet (24) présentant une zone active destinée à être déroulée à travers ladite fente de sortie pour être étendue au droit de ladite fente (28) et en travers dudit habitacle (13), ledit carter comportant en outre des moyens de blocage (34) pour bloquer le déroulement dudit filet (26) lorsque ladite zone active étendue est soumise à l'impact d'une charge propulsée dans ledit habitacle au cours d'une forte décélération dudit véhicule;
lesdits moyens de blocage comprenant des dents de retenue (34) situées le long dudit bord avant (30), lesdites dents de retenue étant orientées dudit bord avant (30) vers ledit bord arrière (32) pour que les mailles (37) dudit filet (24) viennent en prise dans lesdites dents (34) lorsque ladite zone active dudit filet étendue est entraînée vers l'avant (Av);
**caractérisé en ce que** ledit carter (18) comporte en outre une aile d'appui (54) s'étendant à partir dudit bord avant (30) en prolongeant ledit bord avant (30) de façon sensiblement perpendiculaire et dans un sens opposé auxdits moyens de liaison (20) pour prendre appui contre ladite paroi arrière (12) de manière à éviter le basculement du carter (18) vers l'avant (Av) par quoi le déroulement dudit filet est bloqué.

2. Dispositif de retenue selon la revendication 1, **caractérisé en ce que** ledit bord avant (30) est crénelé pour former lesdites dents de retenues (34).

3. Dispositif de retenue selon la revendication 1 ou 2, **caractérisé en ce que** lesdites dents de retenue (34) sont recourbées en crochet vers ledit filet enroulé.

4. Dispositif de retenue selon l'une quelconque des revendications 1 à 3, **caractérisé en ce que** lesdits moyens de liaison (20) comprennent une glissière (40) et un coulisseau (38) pour monter ledit carter (18) de manière amovible sur ladite paroi (12).

5. Dispositif de retenue selon l'une quelconque des revendications 1 à 4, **caractérisé en ce que** ledit carter (18) et lesdits moyens de blocage (34) sont moulés d'une seule pièce en matière plastique.

## Claims

1. Load retention device (10) for motor vehicle, the said vehicle comprising a front portion, a rear portion and a passenger compartment (13) situated between the front and rear portions, the said passenger compartment comprising a seat (14) having a rear wall (12) oriented towards the said rear portion, the said device comprising a retaining net (24) with meshes (37) and a housing (18) inside which the said retaining net is wound, the said housing have an outlet slot (28) for the said net and connecting means (20) for connecting the said housing (18) to the said rear wall (12), the said outlet slot (28) having two opposite edges, a front edge (30) closer to the said connecting means (20) and a rear edge (32) at a distance from the said connecting means, the said net (24) having an active zone designed to be unwound through the said outlet slot so as to be extended in line with the said slot (28) and across the said passenger compartment (13), the said housing also comprising locking means (34) for locking the unwinding of the said net (26) when the said extended active zone is subjected to an impact of a load propelled in the said passenger compartment during a powerful deceleration of the said vehicle; the said locking means comprising retaining teeth (34) situated along the said front edge (30), the said retaining teeth being oriented from the said front edge (30) to the said rear edge (32) so that the meshes (37) of the said net (24) are engaged in the said teeth (34) when the said active zone of the said extended net is pulled forward (Av);
**characterized in that** the said housing (18) also comprises a bearing flange (54) extending from the said front edge (30) and extending the said front edge (30) in a substantially perpendicular manner and in a direction away from the said connecting means (20) in order to bear against the said rear wall (12) so as to prevent the tilting of the housing (18) towards the front (Av) by which the unwinding of the said thread is locked.

2. Retention device according to Claim 1, **characterized in that** the said front edge (30) is crenellated in order to form the said retaining teeth (34).

3. Retention device according to Claim 1 or 2, **characterized in that** the said retaining teeth (34) are curved like a hook towards the said unwound net.

4. Retention device according to any one of Claims 1 to 3, **characterized in that** the said connecting means (20) comprise a slide (40) and a traveller (38) in order to install the said housing (18) removably on the said wall (12).

5. Retention device according to any one of Claims 1 to 4, **characterized in that** the said housing (18) and the said locking means (34) are moulded in a single piece made of plastic.

## Patentansprüche

1. Ladungshaltevorrichtung (10) für ein Kraftfahrzeug, wobei das Fahrzeug einen vorderen Bereich, einen hinteren Bereich und einen zwischen dem vorderen und dem hinteren Bereich befindlichen Fahrzeuginnenraum (13) enthält, wobei der Fahrzeuginnenraum einen Sitz (14) enthält, der eine zum hinteren Bereich gerichtete Rückwand (12) aufweist, wobei die Vorrichtung ein Haltenetz (24) mit Maschen (37) und ein Gehäuse (18) enthält, in dessen Innerem das Haltenetz aufgewickelt ist, wobei das Gehäuse einen Austrittsschlitz (28) für das Netz und Verbindungseinrichtungen (20) aufweist, um das Gehäuse (18) mit der Rückwand (12) zu verbinden, wobei der Austrittsschlitz (28) zwei einander gegenüberliegende Ränder aufweist, einen vorderen Rand (30), der nahe den Verbindungseinrichtungen (20) angeordnet ist, und einen hinteren Rand (32) in Abstand zu den Verbindungseinrichtungen, wobei das Netz (24) eine aktive Zone aufweist, die dazu bestimmt ist, durch den Austrittsschlitz hindurch abgewickelt zu werden, um im rechten Winkel zum Schlitz (28) und quer durch den Fahrzeuginnenraum (13) ausgebreitet zu werden, wobei das Gehäuse außerdem Blockiereinrichtungen (34) aufweist, um das Abwickeln des Netzes (26) zu blockieren, wenn die ausgebreitete aktive Zone dem Aufprall einer Ladung ausgesetzt wird, die während einer starken Abbremsung des Fahrzeugs durch den Fahrzeuginnenraum geschleudert wird;
wobei die Blockiereinrichtungen Haltezähne (34) enthalten, die sich entlang des vorderen Rands (30) befinden, wobei die Haltezähne so vom vorderen Rand (30) zum hinteren Rand (32) gerichtet sind, dass die Maschen (37) des Netzes (24) in den Zähnen (34) in Eingriff kommen, wenn die aktive Zone des ausgebreiteten Netzes nach vorne (Av) gezogen wird;
**dadurch gekennzeichnet, dass** das Gehäuse (18) außerdem einen Auflageflügel (54) aufweist, der sich ausgehend vom vorderen Rand (30) erstreckt, indem er den vorderen Rand (30) im Wesentlichen lotrecht und in einer Richtung entgegengesetzt zu den Verbindungseinrichtungen (20) verlängert, um gegen die Rückwand (12) in Auflage zu kommen, um das Kippen des Gehäuses (18) nach vorne (Av) zu verhindern, wodurch das Abwickeln des Netzes blockiert wird.

2. Haltevorrichtung nach Anspruch 1, **dadurch gekennzeichnet, dass** der vordere Rand (30) gezackt ist, um die Haltezähne (34) zu formen.

3. Haltevorrichtung nach Anspruch 1 oder 2, **dadurch gekennzeichnet, dass** die Haltezähne (34) zum aufgewickelten Netz hin hakenförmig gekrümmt sind.

4. Haltevorrichtung nach einem der Ansprüche 1 bis 3, **dadurch gekennzeichnet, dass** die Verbindungseinrichtungen (20) eine Gleitschiene (40) und ein Gleitstück (38) aufweisen, um das Gehäuse (18) lösbar auf die Wand (12) zu montieren.

5. Haltevorrichtung nach einem der Ansprüche 1 bis 4, **dadurch gekennzeichnet, dass** das Gehäuse (18) und die Blockiereinrichtungen (34) einstückig aus Kunststoff geformt sind.
